## Europäisches Patentamt

## European Patent Office

## Office européen des brevets

(11) Veröffentlichungsnummer: **0 359 701**
**A2**

# EUROPÄISCHE PATENTANMELDUNG

(21) Anmeldenummer: **89810583.8**

(22) Anmeldetag: **31.07.89**

(51) Int. Cl.⁵: **B 24 C 9/00**

(30) Priorität: **16.09.88 CH 3448/88**

(43) Veröffentlichungstag der Anmeldung:
**21.03.90 Patentblatt 90/12**

(84) Benannte Vertragsstaaten:
**AT BE CH DE ES FR GB GR IT LI LU NL SE**

(71) Anmelder: **Mattmann, Daniel**
**Hofstrasse 23**
**CH-6403 Küssnacht (CH)**

(72) Erfinder: **Mattmann, Daniel**
**Hofstrasse 23**
**CH-6403 Küssnacht (CH)**

(54) **Verfahren und Vorrichtung zum Sand-Aufbereiten und -Recyclieren für das Wasser-Hochdruck-Sandstrahlen.**

(57) Die Vorrichtung umfasst untereinander eine Dosiervorrichtung (3), eine Reinigungs- und Siebvorrichtung (4, 5) im Wasserbad, ein Spülbecken (8) mit Lockerungsvorrichtung (8c) und einen Druckbehälter (10), der über Durchlass (9) mit Reinsand beliefert wird. Eine umschaltbare Pumpe liefert durch Zuleitung (12) Wasser niederen Drucks in die Vorrichtung bis zum Niveau N, d.h. zur Reinigungsvorrichtung und zum Spülbecken.

Während des Strahlvorgangs fördert die Pumpe selbsttätig Wasser mit doppelter Menge und verstellbarem Druck, der Durchlass (9) schliesst, im Druckbehälter (10) wird Druck aufgebaut, der das Wasser-Sand-Gemisch durch Auslass (14) zum Sandstrahlgerät fördert. Durch ein Druckreduzierventil (16) wird dabei für gleichbleibenden Wasserdruck in der übrigen Vorrichtung gesorgt.

Fig.1

EP 0 359 701 A2

Beschreibung

## Verfahren und Vorrichtung zum Aufbereiten von Sand und Recyclieren von gebrauchtem Sand für das Wasser-Hochdruck-Sandstrahlen

Die Erfindung betrifft ein Verfahren und eine Vorrichtung zum Aufbereiten von Sand und zum Recyclieren von gebrauchtem Sand für das Wasser-Hochdruck-Sandstrahlen, insbesondere für die Oberflächenbehandlung und Reinigung von Verbundsteinböden, Mauerwerk, Metall, Holz, usw.

Die bisher bekannten Wasser-Hochdruck-Sandstrahlverfahren können nur mit trockenem, gesiebtem Strahlmittel arbeiten. Ausserdem wird der gebrauchte, verstrahlte Sand nicht wieder verwendet, da das Aufsammeln und Aufarbeiten des verbrauchten Materials zur Wiederverwendung im Handbetrieb zu aufwendig und nicht wirtschaftlich durchführbar ist. Diese beiden Umstände führen zu einer grossen Verschwendung des hochwertigen Sandes.

Die Erfindung bezweckt, diese beiden Uebelstände gleichzeitig zu beseitigen und ein Verfahren und eine Vorrichtung vorzuschlagen, mit welchen auch nicht hochwertiges Material zum Sandstrahlen verwendet und selbsttätig zur Wiederverwendung aufgearbeitet werden kann. Die Erfindung erreicht dies durch das im PA. 1 umschriebene Verfahren und mit der im PA. 2 umschriebenen Vorrichtung. Es ist damit möglich geworden, feuchten oder nassen gebrauchten Sand sowie gewöhnlichen See-, Schlemm-, Gruben-, Brechsand oder Schotter, der in Baugewerbe, Landwirtschaft und Industrie in grosser Menge vorhanden oder im Kieswerk billig zu erhalten ist, für das Sandstrahlen zu verwenden.

Ein Ausführungsbeispiel der Erfindung wird an Hand der Zeichnung nachstehend erläutert. Es zeigen:

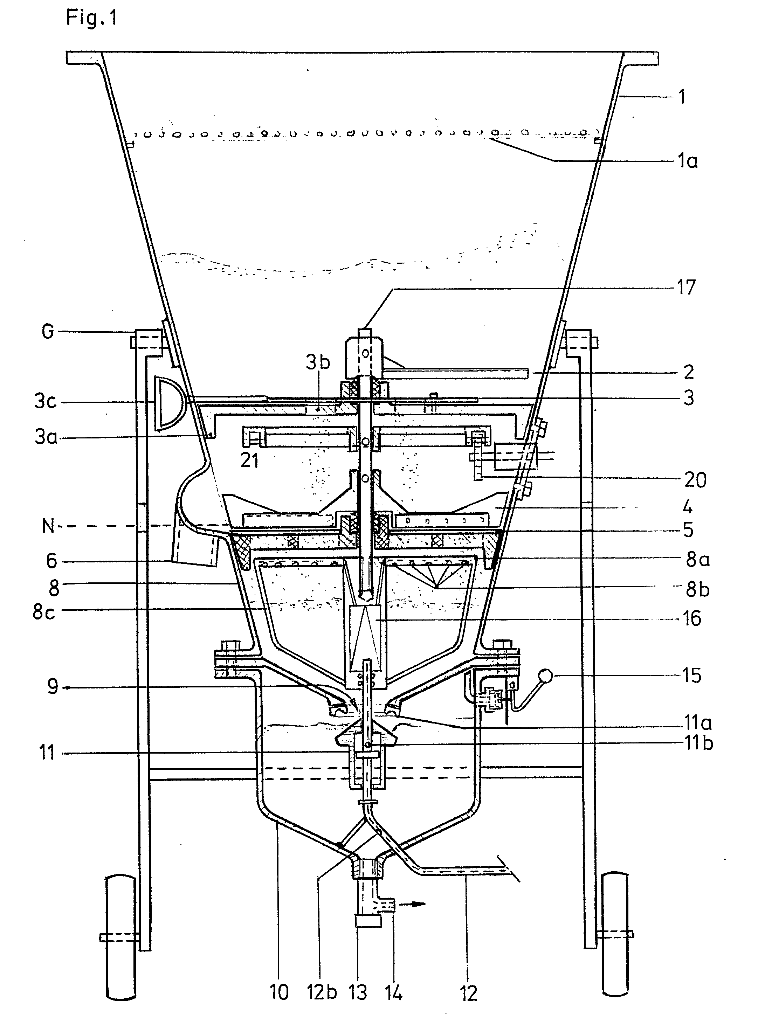

Fig. 1 die Vorrichtung im Vertikalschnitt, und
Fig. 2 eine Einzelheit ebenfalls im Vertikalschnitt

Auf einem Gestell (G), das auf drei Rädern fahrbar ist, ist kippbar ein integraler konischer Metallbehälter (1) gelagert. In seinem oberen Teil bildet dieser einen Vorratsbehälter (1 ) zur Aufnahme des gebrauchten oder frischen, nicht hochwertigen Strahlmittels. Dieses kann manuell eingefüllt werden, es kann aber auch der gebrauchte Sand vom Boden mittels einer Saugvorrichtung, eines Schlauches oder dergleichen eingesammelt und kontinuierlich in den Vorratsbehälter gefüllt werden. Der Vorratsbehälter kann mit einem Grobsieb (1a) versehen sein, oder es kann auch bereits die Saugvorrichtung mit einem entsprechenden Einsaugkorb ausgestattet sein. Staub kann in einem Filter ausgeschieden werden.

Unten im Vorratsbehälter (1) ist eine Dosiervorrichtung angeordnet, die aus einem Boden (3a) mit Löchern (3b) besteht, über welchen eine Scheibe (3) mit entsprechenden Oeffnungen mittels eines Handgriffs (3c) verschoben werden kann, um einen grösseren oder kleineren Durchtrittsquerschnitt zu bilden. Auf einer drehenden Welle (17) ist ein Unterschubarm (2) gelagert, der das Material lockert und gegen das Zentrum und über die Löcher schiebt.

Von der Dosiervorrichtung fällt das Material auf eine Sieb-, Reinigungs- und Ausschwemmvorrichtung. Diese umfasst ein Lochblech (5), über das ein mehrarmiger Siebstern (4) streicht, der ebenfalls auf der Welle (17) befestigt ist. Die Arme des Siebsterns sind rückwärts gebogen, sodass die Grob- und Schlammteile an den Rand geschoben und durch den Auslass (6) abgeführt werden. Die Arme (4) können mit einem Belag aus Polyurethan versehen sein. Das Lochblech (5) kann gegen solche für andere Korngrössen ausgewechselt werden.

Dieser Sieb- und Reinigungsvorgang erfolgt im Wasserbad. Zu diesem Zweck dient eine umschaltbare Druckwasser-Pumpe die an ein Wasser-Zuführrohr (12) angeschlossen ist, das von unten in die Vorrichtung eingeführt ist. Dieses versorgt die Vorrichtung kontinuierlich mit Wasser niederen Drucks, derart, dass das Wasser stets bis zum Niveau (N) über dem Siebboden (5) steht.

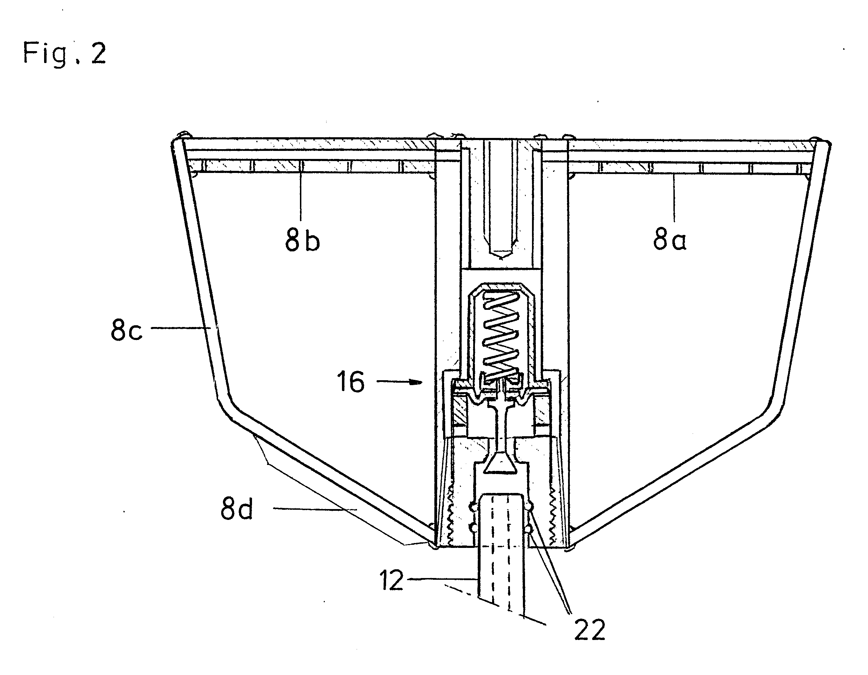

Der ausgesiebte Sand fällt in eine Spül- und Lockerungsvorrichtung, die in Fig. 2 näher dargestellt ist. Diese befindet sich im Spülbecken (8), in welchem sich zwei rohrförmige Arme (8a) drehen, die ebenfalls auf der Welle (17) befestigt sind. Austrittsöffnungen (8b) versorgen das ganze Spülbecken kontinuierlich mit Wasser. An den Armen (8a) sitzen zwei Rühr- und Lockerungsarme (8c), welche den Sand in Bewegung halten und dem Auslass (9) zuführen. Die Arme (8c) können zu diesem Zweck mit Schaufeln (8d) versehen sein (Fig. 2).

Die Welle (17), auf welcher der Unterschubarm (2), der Siebstern (4) und die Lockerungsarme (8c) sitzen, ist von aussen über Zahnräder (20, 21) motorisch oder hydraulisch mit regulierbarer Drehzahl angetrieben.

Durch die Arme (8c) unterstützt, fällt der gereinigte Sand durch den Auslass (9) in einen unten am Metallbehälter (1) angeschraubten Druckbehälter (10), der ebenfalls unter Wasser steht. Der Behälter (10) kann durch Ventil (15) entlüftet werden, und das Wasser kann nötigenfalls durch einen Schnellverschluss (13) abgelassen werden.

Wenn der Behälter (10) mit Sand gefüllt ist, kann der Strahlvorgang beginnen. Das nicht dargestellte Sandstrahlgerät (Hochdruckpistole mit Strahlmitteldrehschieber -Verlängerungsrohr - Metallgehäuse mit integrierten Hochdruckdüse und Hartmetall-Sandstrahldüse) wird betätigt. Der Hochdruckfluss schliesst einen Schaltkontakt, durch welchen die Wasserpumpe von niederen auf höheren Druck für die Sandförderung umgeschaltet wird, sodass etwa die doppelte Wassermenge in die Vorrichtung gefördert wird. Durch den höheren Druck wird ein Ventil (11) geschlossen, indem das Druckwasser aus der Oeffnung (11b) austritt und den Ventilkörper (11) auf den Ventilsitz (11a) presst und den Auslass (9) verschliesst. Im Druckbehälter (10) wird Druck aufgebaut (Austrittsöffnung 12b), sodass das Druckwasser das Wasser-Sandgemisch durch den Auslass (14) in den angeschlossenen Schlauch zum Strahlkopf fördert. Es kann solange gestrahlt werden, bis der Behälter (10) entleert ist. Dadurch wird die Pumpe selbsttätig auf niedrigen Druck und Wassermenge umgeschaltet, das Ventil (11) öffnet und der Behälter (10) füllt sich aufs Neue. Es wird also phasenweise gestrahlt und nachgefüllt.

Damit sich der höhere Wasserdruck nicht auf die übrige Vorrichtung fortsetzt, ist im Spülbecken ein an sich bekanntes Druckreduzierventil (16) zwischengeschaltet, das in Fig. 2 näher dargestellt ist. Dieses Ventil bewirkt, dass das Wasserniveau (N) in der Siebvorrichtung und der Wasserdruck stets erhalten bleiben.

Mit (22) sind zwei Dichtungen zwischen dem drehenden und dem festen Teil der Vorrichtung bezeichnet.

Mit der beschriebenen Vorrichtung wird eine sichere und kontinuierliche Reinigung des verunreinigten, nicht hochwertigen, bzw. des schon gebrauchten Sandes unter Ausscheidung aller Grob- und Schlammteile erreicht, wozu besonders der Siebvorgang im Wasserbad beiträgt. Durch die gleiche Wasserversorgung wird auch das Druckwasser für die Förderung des Wasser-Sand-Gemisches zum Strahlkopf geliefert.

**Patentansprüche**

1. Verfahren zum Aufbereiten von Sand und Recyclieren von gebrauchtem Sand für das Wasser-Hochdruck-Sandstrahlen, dadurch gekennzeichnet, dass gebrauchter Sand oder anderes nicht hochwertiges Strahlmittel mit Hilfe von Wasser niedrigeren Drucks gesiebt und gereinigt wird, wobei die schwimmenden Teile ausgespült und Grob- und Schlammteile beseitigt und abgeführt werden, wonach der gesiebte und gereinigte Sand durchspült und gelockert und in einem Druckbehälter gesammelt wird, von wo er phasenweise durch Wasser höheren Drucks dem Sandstrahlgerät zugeführt wird, wobei die Umschaltung der Wassermenge und des Wasserdrucks durch die Inbetriebsetzung des Strahlgeräts selbsttätig erfolgt.

2. Vorrichtung zur Durchführung des Verfahrens nach Anspruch 1, gekennzeichnet durch eine in einem Vorratsbehälter (1) angeordnete Sieb-, Reinigungs- und Ausschwemmvorrichtung (4, 5, 6) zum Reinigen des Materials im Wasserbad (N), ein anschliessendes Spülbecken (8) mit einer Rühr- und Lockerungsvorrichtung (8c), einen Druckbehälter (10) zum Sammeln des aufbereiteten Sandes mit Sandentnahmestutzen (14), eine an eine Pumpe angeschlossene Druckwasserzuleitung (12) und ein Ventil (11), das bei Erhöhung des Drucks und der Menge in der Zuleitung (12) den Durchlass (9) zwischen Spülbecken (8) und Druckbehälter (10) schliesst, ferner durch Steuermittel, um die Pumpe durch die Betätigung des Sandstrahlgerätes selbsttätig von niederen Druck auf höheren Druck umzusteuern, um das Sand-Wasser-Gemisch bei geschlossenem Ventil (11) aus dem Druckbehälter (10) zum Strahlgerät zu fördern.

3. Vorrichtung nach Anspruch 2, gekennzeichnet durch einen an der Wasserhochdruckpumpe angeordneten, durch den Hochdruckwasserfluss betätigten Schaltkontakt zum Umsteuern der Wasserpumpe von niederen Druck für die Spülung auf höheren Druck für die Spülung und Sand-Förderung während der Dauer des Strahlvorgangs.

4. Vorrichtung nach Anspruch 3, gekennzeichnet durch ein Druckreduzierventil am Ende der Wasserzuleitung (12) zum Ausgleichen des Wasserdrucks, um die Spülung und das Niveau (N) des Wasserbades konstant zu halten.

5. Vorrichtung nach Anspruch 2, gekennzeichnet durch eine oberhalb der Reinigungsvorrichtung (4, 5, 6) angeordnete Dosiervorrichtung (3) mit einem angetriebenen Unter-Schubarm (2).

6. Vorrichtung nach Anspruch 2, dadurch gekennzeichnet, dass die Reinigungsvorrichtung mit einem angetriebenen mehrarmigen Siebstern (4) versehen ist, der über ein Lochblech (5) streicht.

7. Vorrichtung nach Anspruch 2, gekennzeichnet durch einen angetriebenen Spül- und Lockerungsflügel (8c) im Spülbecken (8).

8. Vorrichtung nach Anspruch 5, 6 und 7, dadurch gekennzeichnet, dass Unterschubarm (2), Siebstern (4) und Lockerungsflügel (8c) auf einer gemeinsamen Antriebswelle (17) sitzen, die von aussen elektrisch oder hydraulisch variabel angetrieben ist.

Fig. 1

G

3c

3a

N

6

8

8c

9

11

10  12b  13  14  12

1

1a

17

3b

2

3

21

20

4

5

8a

8b

16

15

11a

11b

Fig. 2

8b

8a

8c

16 →

8d

12

22

EP 0 359 701 A2